# EUROPEAN PATENT APPLICATION

(11) **EP 4 640 764 A1**
(43) Date of publication of application: **29.10.2025**
(21) Application number: 23906660.8
(22) Date of filing: 01.12.2023
(51) Int. Cl.: C08L 77/00, C08K 7/14, C08L 23/26

(54) **POLYAMIDE RESIN COMPOSITION**

(30) Priority: 22.12.2022 JP 2022205730
(71) Applicant: UBE Corporation, Ube-shi, Yamaguchi 755-8633 (JP)
(72) Inventor: KODAMA, Hitoshi, Ube-shi, Yamaguchi 755-8633 (JP); OGOU, Masakatsu, Ube-shi, Yamaguchi 755-8633 (JP); HORIIKE, Yuma, Ube-shi, Yamaguchi 755-8633 (JP)
(74) Representative: Hoffmann Eitle
(86) International application number: PCT/JP2023/043060
(87) International publication number: WO 2024/135292

(57) **Abstract**

The present invention pertains to a polyamide resin composition formed by blending an aliphatic polyamide resin (A), an acid-modified polyolefin (B), and glass fibers to which a sizing agent is applied (C), wherein 50.00 to 90.00 parts by mass of the aliphatic polyamide resin (A), 2.00 to 15.00 parts by mass of the acid-modified polyolefin (B), and 6.00 to 14.00 parts by mass of the glass fibers to which a sizing agent is applied (C) are blended per 100 parts by mass of the polyamide resin composition; a intrinsic viscosity [η] of the acid-modified polyolefin (B) as measured in a decalin solvent at 135°C is 10 to 40 dl/g; an average fiber diameter of the glass fibers (C) is 10.0 µm or less; and the sizing agent contains a polyurethane resin and a copolymer having an acid group.

## Description

### Technical Field

The present invention relates to a polyamide resin composition.

### Background Art

Polyamide resins have excellent properties as engineering plastics and are widely used in various industrial fields such as automobiles, machinery, and electric and electronic fields. Among them, polyamide resins are excellent in rigidity and toughness and used for sliding parts used under frictional conditions, such as gears, cams, pulleys, bearings, bearing retainers, door checks, and timing chain guide articles.

A polyamide resin containing a polyolefin component has been developed in order to improve the sliding property, particularly wear resistance, of such a sliding part.

Patent Literatures 1 and 3 disclose that a polyamide resin composition using an ultrahigh molecular weight polyolefin component is excellent in sliding property. In Patent Literatures 1 and 2, acid-modified polyolefin components are used.

Patent Literature 4 discloses glass fibers treated with a glass fiber sizing agent containing a copolymer compound, aminosilane, and a polyurethane resin, and a glass fiber-reinforced polyamide resin obtained by compounding a polyamide resin.

### Citation List

### Patent Literatures

[Patent Literature 1] JP 2018-199789 A
[Patent Literature 2] JP 2018-119018 A
[Patent Literature 3] JP H10-60269 A
[Patent Literature 4] JP 2014-231452 A

### Summary of Invention

### Technical Problem

The sliding part is required not only to prevent wear of the sliding part itself due to repeated use, but also to prevent deterioration of a contact target.

Although the sliding properties of the polyamide resin compositions of Patent Literatures 1 to 3 have been confirmed, further improvement has been required in order to obtain a composition that satisfies the above requirements.

In the polyamide resin of Patent Literature 4, mechanical strength has only been confirmed.

An object of the present invention is to provide a polyamide resin composition excellent in mechanical properties, sliding properties, and wear resistance.

### Solution to Problem

The present invention is directed to, for example, the following [1] to [6].
[1] A polyamide resin composition including:
   an aliphatic polyamide resin (A), an acid-modified polyolefin (B), and glass fibers to which a sizing agent is applied (C),
   in which 50.00 to 90.00 parts by mass of the aliphatic polyamide resin (A), 2.00 to 15.00 parts by mass of the acid-modified polyolefin (B), and 6.00 to 14.00 parts by mass of the glass fibers to which a sizing agent is applied (C) are blended per 100 parts by mass of the polyamide resin composition,
   a intrinsic viscosity [η] of the acid-modified polyolefin (B) as measured in a decalin solvent at 135°C is 10 to 40 dl/g,
   an average fiber diameter of the glass fibers is 10.0 µm or less, and
   the sizing agent contains a polyurethane resin and a copolymer having an acid group.
[2] The polyamide resin composition according to item [1], further including at least one higher fatty acid compound (D) selected from the group consisting of a higher fatty acid amide (D1) and a higher fatty acid salt (D2) blended in an amount of 0.05 to 0.50 parts by mass per 100 parts by mass of the polyamide resin composition.
[3] The polyamide resin composition according to item [1] or [2], in which the aliphatic polyamide resin (A) has a constituent unit derived from an aminocarboxylic acid or a lactam.
[4] The polyamide resin composition according to any one of items [1] to [3] above, in which the aliphatic polyamide resin (A) has a number average molecular weight of 10,000 to 35,000.
[5] A molded article obtained from the polyamide resin composition according to any one of items [1] to [4] above.
[6] The molded article according to item [5], which is used for an application requiring a sliding property.

### Advantageous Effect of Invention

The polyamide resin composition of the present invention is excellent in mechanical properties, sliding properties, and wear resistance.

### Description of Embodiments

The present invention relates to a polyamide resin composition including:
an aliphatic polyamide resin (A), an acid-modified polyolefin (B), and glass fibers to which a sizing agent is applied (C),
in which 50.00 to 90.00 parts by mass of the aliphatic polyamide resin (A), 2.00 to 15.00 parts by mass of the acid-modified polyolefin (B), and 6.00 to 14.00 parts by mass of the glass fibers to which a sizing agent is applied (C) are blended per 100 parts by mass of the polyamide resin composition,
a intrinsic viscosity [η] of the acid-modified polyolefin (B) as measured in a decalin solvent at 135°C is 10 to 40 dl/g,
an average fiber diameter of the glass fibers is less than 10.0 µm, and
the sizing agent contains a polyurethane resin and a copolymer having an acid group.

### <Aliphatic polyamide resin (A)>

The aliphatic polyamide resin (A) is blended in the polyamide resin composition.

Examples of the aliphatic polyamide resin (A) include an aliphatic homopolyamide resin (A-1) and an aliphatic copolyamide resin (A-2). These resins may be used individually or in combination of two or more thereof.

### (A-1) Aliphatic homopolyamide resin

The aliphatic homopolyamide resin (A-1) means a polyamide resin in which the monomer component constituting the aliphatic polyamide resin is of a single kind. Here, examples of the monomer component constituting the aliphatic polyamide resin include a combination of an aliphatic diamine and an aliphatic dicarboxylic acid, a lactam, and an aminocarboxylic acid. The combination of an aliphatic diamine and an aliphatic dicarboxylic acid is a monomer component composed of a condensate of an aliphatic diamine and an aliphatic dicarboxylic acid.

When the monomer component constituting the aliphatic polyamide resin is the combination of an aliphatic diamine and an aliphatic dicarboxylic acid, a combination of one aliphatic diamine and one aliphatic dicarboxylic acid is regarded as one monomer component.

The number of carbon atoms of the aliphatic diamine is preferably 2 to 20, particularly preferably 4 to 12. The number of carbon atoms of the aliphatic dicarboxylic acid is preferably 2 to 20, particularly preferably 6 to 12. The number of carbon atoms of the lactam is preferably 4 to 12. The number of carbon atoms of the aminocarboxylic acid is preferably 4 to 12.

Examples of the lactam include ε-caprolactam, enantholactam, undecanolactam, α-pyrrolidone, α-piperidone, and lauryllactam.

Of these, from the viewpoint of the polymerization production, preferred is one member selected from the group consisting of ε-caprolactam, undecanolactam, and lauryllactam.

Examples of the aminocarboxylic acid include 6-aminocaproic acid, 7-aminoheptanoic acid, 9-aminononanoic acid, 11-aminoundecanoic acid, and 12-aminododecanoic acid.

Of these, from the viewpoint of the polymerization production, preferred is one member selected from the group consisting of 6-aminocaproic acid, 11-aminoundecanoic acid, and 12-aminododecanoic acid.

Examples of the aliphatic diamine include aliphatic diamines excluding alicyclic diamines, such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines, such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bis(aminomethyl)cyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbomanedimethyleneamine.

Of these, from the viewpoint of the polymerization productivity, an aliphatic diamine other than alicyclic diamines is preferred, and hexamethylenediamine is more preferred.

Examples of the aliphatic dicarboxylic acid include aliphatic dicarboxylic acids excluding alicyclic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; and alicyclic dicarboxylic acids, such as 1,3-/1,4-cyclohexanedicarboxylic acid, dicyclohexanemethane-4,4'-dicarboxylic acid, and norbornanedicarboxylic acid.

Of these, an aliphatic dicarboxylic acid other than alicyclic dicarboxylic acids is preferred, and one member selected from the group consisting of adipic acid, sebacic acid, and dodecanedioic acid is more preferred, and adipic acid or dodecanedioic acid is further preferred.

Examples of the combination of an aliphatic diamine and an aliphatic dicarboxylic acid include a combination of hexamethylenediamine and adipic acid, a combination of hexamethylenediamine and sebacic acid, and a combination of hexamethylenediamine and dodecanedioic acid, and equimolar salts of these combinations are preferably used.

Specific examples of the aliphatic homopolyamide resin (A-1) include polybutyrolactam (polyamide 4), polytetramethylene adipamide (polyamide 46), polytetramethylene azelamide (polyamide 49), polytetramethylene sebacamide (polyamide 410), polyvalerolactam (polyamide 5), polycaprolactam (polyamide 6), polyenantholactam (polyamide 7), polyundecanolactam (polyamide 11), polylauryllactam (polyamide 12), polypentamethylene adipamide (polyamide 56), polyhexamethylene adipamide (polyamide 66), polytetramethylene dodecamide (polyamide 412), polypentamethylene azelamide (polyamide 59), polypentamethylene sebacamide (polyamide 510), polypentamethylene dodecamide (polyamide 512), polypentamethylene tridecamide (polyamide 513), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), polydodecamethylene dodecamide (polyamide 1212), and polydodecamethylene oxamide (polyamide 122).

The aliphatic homopolyamide resins (A-1) may be used individually or in combination of two or more thereof.

Of these, from the viewpoint of the polymerization productivity, the aliphatic homopolyamide resin (A-1) is preferably at least one member selected from the group consisting of polyamide 6, polyamide 11, polyamide 12, polyamide 66, polyamide 610, and polyamide 612, more preferably at least one member selected from polyamide 6, polyamide 11, polyamide 12, polyamide 610, and polyamide 612, further preferably polyamide 6.

### (A-2) Aliphatic copolyamide resin

The aliphatic copolyamide resin (A-2) is an aliphatic polyamide resin having two or more monomer components constituting the aliphatic polyamide resin and having no aromatic ring. Therefore, examples of the aliphatic copolyamide resin (A-2) include an aliphatic copolyamide resin that is a copolymer of two or more monomers selected from the group consisting of a combination of an aliphatic diamine and an aliphatic dicarboxylic acid, a lactam, and an aminocarboxylic acid. Here, the combination of an aliphatic diamine and an aliphatic dicarboxylic acid is a monomer component composed of a condensate of an aliphatic diamine and an aliphatic dicarboxylic acid. With respect to the combination of an aliphatic diamine and an aliphatic dicarboxylic acid, a combination of one kind of a diamine and one kind of a dicarboxylic acid is regarded as one kind of a monomer component.

As examples of the aliphatic diamine, there can be mentioned the same as mentioned above as examples of the raw materials for the aliphatic homopolyamide resin (A-1). The diamines may be used individually or appropriately in combination of two or more thereof. Of these, from the viewpoint of the polymerization productivity, preferred is at least one member selected from the group consisting of aliphatic diamines excluding alicyclic diamines, more preferred is at least one member selected from the group consisting of linear aliphatic diamines, and further preferred is hexamethylenediamine.

As examples of the aliphatic dicarboxylic acid, there can be mentioned the same as mentioned above as examples of the raw materials for the aliphatic homopolyamide resin (A-1). The dicarboxylic acids may be used individually or appropriately in combination of two or more thereof. Of these, preferred is an aliphatic dicarboxylic acid other than alicyclic dicarboxylic acids, more preferred is at least one member selected from the group consisting of adipic acid, sebacic acid, and dodecanedioic acid, and further preferred is at least one member selected from the group consisting of adipic acid and dodecanedioic acid.

As examples of the lactam, there can be mentioned the same as mentioned above as examples of the raw materials for the aliphatic homopolyamide resin (A-1). The lactams may be used individually or appropriately in combination of two or more thereof.

Of these, from the viewpoint of the polymerization production, preferred is at least one member selected from the group consisting of ε-caprolactam, undecanolactam, and lauryllactam.

As examples of the aminocarboxylic acid, there can be mentioned the same as mentioned above as examples of the raw materials for the aliphatic homopolyamide resin (A-1). The aminocarboxylic acids may be used individually or appropriately in combination of two or more thereof. Of these, from the viewpoint of the polymerization production, preferred is at least one member selected from the group consisting of 6-aminocaproic acid, 11-aminoundecanoic acid, and 12-aminododecanoic acid.

Specific examples of the aliphatic copolyamide resin (A-2) include aliphatic copolyamides, such as a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanoic acid copolymer (polyamide 6/611), a caprolactam/hexamethylenediaminododecanoic acid copolymer (polyamide 6/612), a caprolactam/aminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), a caprolactam/hexamethylenediaminoadipic acid/hexamethylenediaminosebacic acid copolymer (polyamide 6/66/610), a caprolactam/hexamethylenediaminoadipic acid/hexamethylenediaminododecanedicarboxylic acid copolymer (polyamide 6/66/612), and a hexamethylenediaminoadipic acid/caprolactam copolymer (polyamide 66/6). The aliphatic copolyamide resins (A-2) may be used individually or in combination of two or more thereof.

Of these, from the viewpoint of suppressing the water absorption of a molded article and maintaining the mechanical strength of the molded article, at least one member selected from the group consisting of polyamide 6/66, polyamide 6/12, and polyamide 6/66/12 is preferable, at least one member selected from the group consisting of polyamide 6/66 and polyamide 6/66/12 is more preferable, and polyamide 6/66 is particularly preferable.

From the viewpoint of productivity, the aliphatic polyamide resin (A) preferably has a constituent unit derived from an aminocarboxylic acid or a lactam, and is preferably the aliphatic homopolyamide resin (A-1), more preferably one or more selected from the group consisting of polyamide 6, polyamide 46, polyamide 66, polyamide 610, polyamide 612, polyamide 11, and polyamide 12, particularly preferably polyamide 6, polyamide 46, and/or polyamide 66.

From the viewpoint of the sliding property, the number average molecular weight of the aliphatic polyamide resin (A) is preferably 10,000 to 35,000, more preferably 10,000 to 32,000, further preferably 11,000 to 30,000. The number average molecular weight is a value calculated from the relative viscosity. The relative viscosity is a value measured according to JIS K 6920-2 by dissolving 1 g of the polyamide in 100 ml of 96% concentrated sulfuric acid and performing measurement at 25°C.

The terminal amino group concentration of the aliphatic polyamide resin (A), in terms of a terminal amino group concentration determined by neutralization titration with respect to the resin dissolved in a mixed solvent of phenol and methanol, is preferably in the range of 30 µmol/g or more, more preferably in the range of 30 µmol/g or more and 50 µmol/g or less. When the terminal amino group concentration of the aliphatic polyamide resin (A) is in the above range, satisfactory molding processability and mechanical physical properties can be obtained.

When the aliphatic polyamide resin (A) contains two or more polyamide resins having different terminal amino group concentrations (for example, at least one aliphatic homopolyamide resin (A-1) and at least one aliphatic copolyamide resin (A-2)), it is preferred that the terminal amino group concentration of the aliphatic polyamide resin (A) is measured by the above-mentioned neutralization titration, but, when the terminal amino group concentrations of the respective polyamide resins and the ratios of the polyamide resins mixed are known, an average calculated from the total of values obtained by multiplying the terminal amino group concentrations by the respective ratios can be used as the terminal amino group concentration of the aliphatic polyamide resin (A). In the present invention, a value measured by neutralization titration is adopted.

The aliphatic polyamide resin (A) may be one component or a combination of two or more components.

The blending amount of the aliphatic polyamide resin (A) is 50.00 to 90.00 parts by mass, preferably 65.00 to 87.00 parts by mass, more preferably 75.00 to 85.00 parts by mass per 100 parts by mass of the polyamide resin composition. When the blending amount of the aliphatic polyamide resin (A) is in the above range, good mechanical physical properties and molding processability are achieved.

### <Acid-modified polyolefin (B)>

The acid-modified polyolefin (B) is blended in the polyamide resin composition.

The acid-modified polyolefin (B) is a polyolefin modified with a compound containing an acid-modified group. The acid-modified polyolefin (B) may be further modified with a compound containing a modification group other than an acid-modified group, in addition to modification with a compound containing an acid-modified group.

The polyolefin is modified with a compound containing an acid-modified group, thereby improving the affinity with the aliphatic polyamide resin (A).

The polyolefin is an olefin homopolymer or copolymer. Examples of the olefin include ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These compounds may be used individually or in combination of two or more thereof.

The copolymer may be obtained by copolymerizing a polyene such as a non-conjugated diene. Examples of the non-conjugated diene include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbomene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,5-norbomadiene. These compounds may be used individually or in combination of two or more thereof.

The polyolefin is preferably a homopolymer of ethylene or a copolymer of ethylene and an α-olefin other than ethylene. Examples of commercially available products of the polyolefin include those sold as ultrahigh molecular weight polyolefins.

Examples of the acid-modified group of the polyolefin include a carboxy group, a carboxy metal salt, an acid anhydride group, and a sulfonic acid group. The acid-modified group is preferably a carboxy group or an acid anhydride group. Examples of the modification group other than the acid-modified group include an amino group, a hydroxy group, a silanol group, an alkoxy group, an epoxy group, an isocyanate group, a mercapto group, and an oxazoline group.

The acid-modified polyolefin (B) can be obtained by melt-kneading a polyolefin and a compound containing an acid-modified group and graft-modifying the polyolefin to introduce the acid-modified group. The acid-modified polyolefin (B) can also be produced by reacting a polyolefin with a compound containing the acid-modified group in the absence of a solvent using an extruder, a twin-screw kneader, or the like.

Examples of the compound containing the acid-modified group include compounds such as unsaturated carboxylic acids or derivatives thereof, hydroxy group-containing ethylenically unsaturated compounds, amino group-containing ethylenically unsaturated compounds, and vinyl group-containing organosilicon compounds. Examples of the unsaturated carboxylic acid or a derivative thereof include an unsaturated compound having one or more carboxy groups, an ester of a compound having a carboxy group and an alkyl alcohol, and an unsaturated compound having one or more anhydrous carboxy groups. Examples of the unsaturated group include a vinyl group, a vinylene group, and an unsaturated cyclic hydrocarbon group. The compound containing an acid-modified group is preferably an unsaturated carboxylic acid or a derivative thereof from the viewpoint of reactivity.

Specific examples of the unsaturated carboxylic acid include unsaturated dicarboxylic acids such as acrylic acid, maleic acid, fumaric acid, tetrahydrophthalic acid, itaconic acid, mesaconic acid, citraconic acid, crotonic acid, isocrotonic acid, and endo-cis-bicyclo[2,2,1]hept-5-ene-2,3-dicarboxylic acid. Examples of the derivative of the unsaturated carboxylic acid include acid halides, amides, imides, anhydrides, and esters of the unsaturated carboxylic acid, and malenyl chloride, maleimide, maleic anhydride, citraconic anhydride, monomethyl maleate, dimethyl maleate, glycidyl maleate, and the like are preferable. The unsaturated carboxylic acid or the derivative thereof is more preferably maleic anhydride and/or acrylic acid, particularly preferably maleic anhydride, from the viewpoint of reactivity.

The compound containing an acid-modified group may be one component or two or more components.

The compound containing a modification group other than the acid-modified group can be appropriately selected from the above-described compounds containing a modification group other than the acid-modified group.

When the polyolefin is acid-modified, the addition amount of the compound containing an acid-modified group and the compound containing an arbitrary modification group other than an acid-modified group can be appropriately set according to the desired modification amount of the polyolefin.

When the acid-modified polyolefin (B) is obtained by melt-kneading the polyolefin and the compound containing an acid-modified group and graft-modifying the polyolefin to introduce the acid-modified group, the graft modification of the polyolefin can be performed, for example, by dissolving the polyolefin in an organic solvent, then adding the compound containing an acid-modified group, a radical initiator, and the like to the solution, and performing the reaction. The reaction temperature is preferably 70°C to 200°C, particularly preferably 80°C to 190°C. The reaction time is preferably 0.5 hours to 15 hours, particularly preferably 1 to 10 hours.

When the acid-modified polyolefin (B) is obtained by reacting the polyolefin with the compound containing an acid-modified group in the absence of a solvent using an extruder, a twin-screw kneader, or the like, the reaction temperature is preferably equal to or higher than the melting point of the polyolefin, particularly preferably 160°C to 330°C. The reaction is preferably performed by melt-kneading for 0.5 minutes to 10 minutes.

The intrinsic viscosity [η] of the acid-modified polyolefin (B) measured in a decalin solvent at 135°C is 10 to 40 dl/g, preferably 15 to 35 dl/g, more preferably 20 to 30 dl/g. When the intrinsic viscosity [η] is 10 or more, the dynamic friction coefficient of the polyamide resin composition decreases, and the sliding property tends to be further improved. The intrinsic viscosity [η] of the acid-modified polyolefin (B) can be adjusted by changing the polymerization conditions.

Examples of the acid-modified polyolefin (B) include components disclosed in JP 2018-199789 A and JP 2006-28231 A in addition to the above.

The acid-modified polyolefin (B) may be one component or a combination of two or more components.

The blending amount of the acid-modified polyolefin (B) is 2.00 to 15.00 parts by mass, preferably 2.00 to 13.00 parts by mass, more preferably 4.00 to 11.00 parts by mass per 100 parts by mass of the polyamide resin composition. When the blending amount of the acid-modified polyolefin (B) is within the above range, the sliding property and the mechanical strength are good.

### <Glass fibers to which sizing agent containing polyurethane resin and copolymer having acid group is applied (C)>

Glass fibers to which a sizing agent containing a polyurethane resin and a copolymer having an acid group is applied (C) are blended in the polyamide resin composition. The glass fibers to which a sizing agent containing a polyurethane resin and a copolymer having an acid group is applied (C) (hereinafter also referred to as "glass fibers to which a sizing agent is applied (C)") are a component that imparts excellent sliding properties and mechanical properties to the polyamide resin composition.

### [Glass fibers]

Examples of the glass constituting the glass fibers include those having a composition of A-glass, AR-glass, C-glass, D-glass, E-glass, H-glass, S-glass, T-glass, M-glass, NE-glass, or the like.

The fibers refer to a shape having an aspect ratio (ratio of long diameter/short diameter) of 10 or more.

The glass fibers may be broken when melt-kneaded with other components. Therefore, as long as the glass fibers satisfy the definition of "fibers" in the present specification at the time of start of blending, the glass fibers also include those which are broken by melt-kneading and, as a result, no longer satisfy the definition of "fibers" in the present specification in the polyamide composition.

The shape of the glass fibers is not particularly limited, and examples thereof include flat fibers and chopped strands. The shape of the section of the glass fibers is not particularly limited, and examples thereof include a perfect circle, an ovaloid, an oval, a rectangle, and a similar shape thereof.

The average fiber diameter of the glass fibers is 10.0 µm or less, preferably 5.0 µm to 10.0 µm, more preferably 5.0 µm to 8.0 µm. When the average fiber diameter of the glass fibers is within the above range, the sliding property is excellent, and the wear amount is reduced. The average fiber diameter of the glass fibers is a value measured with an optical microscope and may be a catalog value when a commercially available product is used. The average fiber diameter of the glass fibers to which a sizing agent is applied (C) is also preferably in the same range.

When the section of the glass fibers is rectangular or similar, the length of one side of the section is preferably 0.5 µm to 50 µm, particularly preferably 1 to 40 µm. The number average fiber length of the glass fibers is preferably 250 µm to 400 µm, particularly preferably 300 µm to 360 µm. The weight average fiber length of the glass fibers is preferably 350 µm to 550 µm, particularly preferably 380 µm to 500 µm. The number average fiber length and the weight average fiber length of the glass fibers can be determined from an image photographed using a transmission microscope using image analysis software. The aspect ratio obtained by dividing the number average fiber length by the average fiber diameter of the glass fibers is preferably 10 or more, particularly preferably 15 to 100, from the viewpoint of rigidity, mechanical strength, and fluidity.

### [Polyurethane resin]

The polyurethane resin is a resin obtained by subjecting a polyol component and a polyisocyanate component to a urethane reaction.

### <<Polyol component>>

Examples of the polyol component include polyester polyols (condensation-based polyester polyols and lactone-based polyester polyols), polycarbonate polyols, and polyether polyols.

Examples of the condensation-based polyester polyols include those obtained by reacting a dicarboxylic acid or a lower alkyl ester thereof with an aliphatic diol. Here, examples of the dicarboxylic acid or a lower alkyl ester thereof include adipic acid, succinic acid, azelaic acid, pimelic acid, sebacic acid, and phthalic acid. Examples of the aliphatic diol include aliphatic diols having no side chain, such as ethylene glycol, 1,4-butanediol, 1,6-hexanediol, and 1,10-decamethylene glycol, and aliphatic diols having a side chain, such as 1,2-propylene glycol, 1,3-butanediol, 2,5-dimethyl-2,5-hexanediol, 2,2-diethyl-1,3-propanediol, and neopentyl glycol.

Examples of the lactone-based polyester polyols include products obtained by reacting a lactone compound such as β-propiolactone, pivalolactone, δ-valerolactone, ε-caprolactone, methyl-ε-caprolactone, dimethyl-ε-caprolactone, and trimethyl-ε-caprolactone with a hydroxy compound such as a short-chain polyol.

As the polycarbonate polyol, those obtained by a transesterification reaction from a hydroxy compound such as a short-chain polyol and diallyl carbonate, a dialkyl carbonate, or ethylene carbonate are used. For example, poly-1,6-hexamethylene carbonate, poly-2,2'-bis(4-hydroxyhexyl)propane carbonate, and the like are industrially produced and easily available. As another method for obtaining the polycarbonate polyol, what is called a phosgene method (or solvent method) can be used.

Examples of the polyether polyol include polyethylene glycol, polypropylene glycol, polytetramethylene glycol, polyoxypropylene glycol, and glycerin-based polyalkylene ether glycols.

### <<Polyisocyanate component>>

Examples of the polyisocyanate include aliphatic polyisocyanates, alicyclic polyisocyanates, and aromatic polyisocyanates.

Examples of the aliphatic polyisocyanate include ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

Examples of the alicyclic polyisocyanate include isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate.

Examples of the aromatic polyisocyanate include 1,3-phenylene diisocyanate, 1,4-phenylene diisocyanate, 2,4-tolylene diisocyanate (TDI), 2,6-tolylene diisocyanate, 4,4'-diphenylmethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonyl isocyanate, p-isocyanatophenylsulfonyl isocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, 1-methyl-naphthalene-1,5-diisocyanate, naphthalene-2,6-diisocyanate, naphthalene-2,7-diisocyanate, 1,1-dinaphthyl-2,2'-diisocyanate, biphenyl-2,4'-diisocyanate, 3,3'-dimethylbiphenyl-4,4'-diisocyanate, and 2,2'-diphenylmethane diisocyanate.

The polyisocyanate is preferably a diisocyanate having two isocyanato groups per molecule.

In the urethanization reaction, a chain extender such as a polyhydric alcohol and a polyhydric amine can also be used.

### [Copolymer having acid group]

Examples of the copolymer having an acid group include a copolymer of a monomer having an acid group or a copolymer of a monomer having an acid group and a monomer not having an acid group.

Examples of the monomer having an acid group include unsaturated carboxylic acids and carboxylic anhydrides. Examples of the unsaturated carboxylic acid include acrylic acid, maleic acid, fumaric acid, tetrahydrophthalic acid, itaconic acid, mesaconic acid, citraconic acid, crotonic acid, isocrotonic acid, and endo-cis-bicyclo[2,2,1]hept-5-ene-2,3-dicarboxylic acid. Examples of the carboxylic anhydride include dicarboxylic anhydrides such as maleic anhydride, itaconic anhydride, succinic anhydride, phthalic anhydride, glutaric anhydride, dodecenylsuccinic anhydride, chlorendic anhydride, and citraconic anhydride. Examples of the carboxylic anhydride include dicarboxylic anhydrides such as maleic anhydride, itaconic anhydride, succinic anhydride, phthalic anhydride, glutaric anhydride, dodecenylsuccinic anhydride, and chlorendic anhydride. The carboxylic anhydride is preferably maleic anhydride because it shows little steric hindrance during copolymerization and the polarity of the compound is small. In addition, the monomer having an acid group may be a monomer having a functional group having a function equivalent to an acid group, and examples of such a functional group include an acid halide, an amide, an imide, and an ester of the unsaturated carboxylic acid. Examples of the monomer having a functional group having a function equivalent to an acid group include malenyl chloride, maleimide, monomethyl maleate, dimethyl maleate, and glycidyl maleate. These monomers may be used individually or in combination of two or more thereof.

Examples of the monomer having no acid group include styrene, ethylene, and acetylene.

The copolymer having an acid group is preferably a copolymer compound obtained by copolymerizing an unsaturated dicarboxylic acid and/or carboxylic anhydride, methyl acrylate, and methyl methacrylate.

The copolymerization ratio of the unsaturated dicarboxylic acid and/or carboxylic anhydride is preferably 20 to 60% by mass, particularly preferably 25 to 55% by mass, from the viewpoint of reactivity in producing the copolymer and mechanical properties. The copolymerization ratio of methyl acrylate is preferably 20 to 75% by mass, particularly preferably 30 to 65% by mass, from the viewpoint of reactivity in producing the copolymer and mechanical properties. The copolymerization ratio of methyl methacrylate is preferably 5 to 20% by mass, particularly preferably 7 to 17% by mass, from the viewpoint of reactivity in producing the copolymer and mechanical properties. The copolymerization ratio of the monomer having no acid group is preferably 10% by mass or less, particularly preferably 1% by mass or less.

The weight average molecular weight of the copolymer compound is preferably 10,000 to 60,000, particularly preferably 20,000 to 50,000, from the viewpoint of reactivity in producing the copolymer and mechanical properties. The weight average molecular weight of the copolymer compound is a molecular weight measured by gel permeation chromatography (GPC).

### [Other components of sizing agent]

The sizing agent may contain additional components in addition to the polyurethane resin and the copolymer having an acid group. Examples of the additional components include a coupling agent, a lubricant, a nonionic surfactant, an antistatic agent, water, and an organic solvent. Examples of the lubricant include fatty acid amides and quaternary ammonium salts. Examples of the nonionic surfactant include synthetic alcohol-based surfactants, natural alcohol-based surfactants, and fatty acid ester-based surfactants. Water and the organic solvent are components that dissolve a lubricant, a nonionic surfactant, an antistatic agent, and the like. Examples of the organic solvent include ethanol.

The content of each component in the sizing agent can be appropriately set according to the properties of the glass fibers to be obtained.

### [Application]

The sizing agent containing the polyurethane resin and the copolymer having an acid group is applied to the glass fibers. "Application" means that the sizing agent is attached to the surface of at least a part of the glass fibers. The glass fibers are surface-treated by the application of the sizing agent. In addition, the glass fibers may be subjected to a sizing treatment in which two or more glass fibers are combined into one by applying the sizing agent. The sizing treatment can also be performed by applying the sizing agent to a plurality of glass fiber monofilaments formed by drawing out molten glass from a plurality of nozzles, then bundling the glass fiber monofilaments into one glass fiber strand, and then winding the glass fiber strand as a cake.

The glass fibers to which the sizing agent is applied (C) may be surface-treated with an additional component. Examples of such a component include additional components contained in the sizing agent.

Examples of the glass fibers to which the sizing agent containing the polyurethane resin and the copolymer having an acid group is applied (C) include components disclosed in JP 2014-231452 A in addition to the above.

The glass fibers to which the sizing agent containing the polyurethane resin and the copolymer having an acid group is applied (C) may be one component or a combination of two or more components.

The blending amount of the glass fibers to which the sizing agent is applied (C) is 6.00 to 14.00 parts by mass. When the blending amount of the glass fibers (C) is out of the above range, the mechanical properties tend to be poor. In addition, when the blending amount of the glass fibers (C) exceeds 14.00 parts by mass, the wear amount of the sliding part and the object with which the sliding part comes into contact increases. The blending amount of the glass fibers to which the sizing agent is applied (C) is preferably 7.00 to 13.00 parts by mass, particularly preferably 8.00 to 12.00 parts by mass, from the viewpoint of molding processability and mechanical strength.

### <Higher fatty acid compound (D)>

The polyamide resin composition preferably contains at least one higher fatty acid compound (D) selected from the group consisting of a higher fatty acid amide (D1) and a higher fatty acid salt (D2). Among the higher fatty acid compounds (D), higher fatty acid amides are preferred. From the viewpoint of reducing the wear amount, it is preferable to use a combination of a higher fatty acid amide and a higher fatty acid salt.

Examples of the higher fatty acid include fatty acids having 12 or more carbon atoms, and specific examples thereof include lauric acid, stearic acid, myristic acid, erucic acid, palmitic acid, behenic acid, oleic acid, arachidic acid, ricinoleic acid, and behenic acid.

Examples of the higher fatty acid salt (D2) include metal salts of higher fatty acids. Examples of the metal include Group 1 elements (alkali metals), Group 2 elements (alkaline earth metals), Group 12 elements, and Group 13 elements. Specific examples thereof include magnesium stearate, zinc stearate, lithium stearate, calcium stearate, aluminum palmitate, lithium behenate, and calcium behenate.

Examples of the higher fatty acid amide (D1) include aliphatic mono higher fatty acid amides, such as lauramide, palmitamide, oleamide, stearamide, erucamide, behenamide, ricinoleamide, and 12-hydroxystearamide; N-substituted aliphatic monocarboxamides, such as N-lauryllauramide, N-palmitylpalmitamide, N-oleylpalmitamide, N-oleyloleamide, N-oleylstearamide, N-stearylstearamide, N-stearyloleamide, N-stearylerucamide, N-stearyl-12-hydroxystearamide, N-oleyl-12-hydroxystearamide, methylolstearamide, methylolbehenamide, and 12-hydroxystearic acid monoethanol amide; aliphatic biscarboxamides, such as methylenebisstearamide, methylenebislauramide, methylenebis-12-hydroxystearamide, ethylenebiscapramide, ethylenebislauramide, ethylenebisoleamide, ethylenebisstearamide, ethylenebiserucamide, ethylenebisbehenamide, ethylenebisisostearamide, ethylenebis-12-hydroxystearamide, butylenebisstearamide, hexamethylenebisoleamide, hexamethylenebisstearamide, hexamethylenebisbehenamide, hexamethylenebis-12-hydroxystearamide, N,N'-dioleylsebacamide, N,N'-dioleyladipamide, N,N'-distearyladipamide, and N,N'-distearylsebacamide; alicyclic carboxamides, such as N,N'-dicyclohexanecarbonyl-1,4-diaminocyclohexane, 1,4-cyclohexanedicarbamide, diaminocyclohexane 1,4-cyclohexanedicarboxylate, tetracyclohexylamide 1,2,3,4-butanetetracarboxylate, N,N'-bis(3-hydroxypropyl)-1,4-cubanedicarbamide, N,N'-(1,4-cyclohexanediyl)bis(acetamide), and tris(methylcyclohexyl)propanetricarboxamide; and aromatic carboxamides, such as 1,4-cyclohexanedicarboxylic acid dianilide, 1,4-cyclohexanedicarboxylic acid dibenzylamide, trimesic acid tris(t-butylamide), trimesic acid tricyclohexylamide, trimesic acid tri(2-methylcyclohexylamide), trimesic acid tri(4-cyclohexylamide), 2,6-naphthalenedicarboxylic acid dicyclohexylamide, N,N'-dibenzylcyclohexane-1,4-dicarbamide, N,N'-distearylisophthalamide, N,N'-distearylterephthalamide, m-xylylenebisstearamide, and m-xylylenebis-12-hydroxystearamide. Among them, aliphatic carboxamides selected from the group consisting of aliphatic monocarboxamides, N-substituted aliphatic monocarboxamides, and aliphatic biscarboxamides are preferable, and aliphatic biscarboxamides are more preferable.

The higher fatty acid compound (D) may be one component or a combination of two or more components.

The blending amount of the higher fatty acid compound (D) is preferably 0.05 to 0.50 parts by mass, more preferably 0.10 to 0.50 parts by mass, further preferably 0.15 to 0.45 parts by mass per 100 parts by mass of the polyamide resin composition. When the blending amount of the higher fatty acid compound (D) is within the above range, releasability is improved without bleeding out from the molded body, and the higher fatty acid compound (D) contributes well to crystallization.

### <Components other than (A) to (D)>

The polyamide resin composition can contain components other than the components (A) to (D) as long as the effects of the present invention are not impaired.

Examples of the components other than the components (A) to (D) include resins other than the components (A) and (B), and function imparting agents.

Examples of the resin other than the components (A) and (B) include semi-aromatic polyamide resins, aromatic polyamide resins, unmodified polyolefin resins such as low density, medium density, and high density polyethylene, polypropylene, and polybutene, polyester resins such as polyethylene terephthalate, polybutylene terephthalate, and polyester-based elastomers, vinyl aromatic resins such as polystyrene, ABS resins, and AS resins, polyether-based resins, polyurethane resins, acrylic resins, polyimide-based resins, polycarbonate-based resins, polyacetal, polyvinyl alcohol, and rosin-based resins.

Examples of the function imparting agent include various additives usually blended in polyamide resin compositions. Specific examples of the function imparting agent include a plasticizer, a heat-resisting agent, a foaming agent, a weathering agent, a crystal nucleating agent, an antioxidant, a crystallization accelerator, a release agent, a lubricant, an antistatic agent, a dispersant, a flame retardant, a flame retardant auxiliary, a pigment, and a dye.

In the case where the function imparting agent is a heat-resisting agent, organic or inorganic heat-resisting agents can be used as the heat-resisting agent according to the purpose, and these may be used individually or in combination of two or more thereof.

Examples of organic heat-resisting agents include a phenol-based compound, a phosphorus-based compound, a sulfur-based compound, and a nitrogen-based compound. These compounds may be used individually or in combination of two or more thereof.

Preferred examples of the phenol-based compound include a hindered phenolic organic compound. In the present specification, the term "hindered phenol" means a phenolic compound having a substituent at the ortho-position with respect to the hydroxy group of phenol.

Preferable examples of the phosphorus-based compound include a phosphorous acid ester compound of a hindered phenol and a hypophosphorous acid ester compound of a hindered phenol.

The heat-resisting agent is preferably a combination of an inorganic compound and a nitrogen-containing compound or an inorganic compound.

Examples of the inorganic compound include metal halides and inorganic compounds other than metal halides.

The metal halide is a compound of a halogen and a metal. Examples of the halogen include fluorine, chlorine, bromine, and iodine. Examples of the metal include Group 1 elements (alkali metals), Group 2 elements (alkaline earth metals), and Groups 3 to 12 elements (such as transition metals). The metal in the metal halide is preferably a metal of Group 1 elements (alkali metals) or Group 11 elements (copper group). Examples of the metal halide in the case where the metal is a Group 1 element (alkali metal) include potassium iodide, potassium bromide, potassium chloride, sodium iodide, and sodium chloride. Examples of the metal halide in the case where the metal is a Group 11 element (copper group) include cuprous chloride, cupric chloride, cuprous bromide, cupric bromide, cuprous iodide, and cupric iodide. The metal halide is particularly preferably potassium iodide and/or cuprous iodide.

Examples of the inorganic compound other than the metal halide include metals, metal oxides, metal hydroxides, metal nitrides, metal phosphates, metal phosphites, metal carbonates, metal silicates, metal titanates, metal borates, metal sulfates, and metal nitrates. Specific examples of the inorganic compound other than the metal halide include talc, mica, synthetic mica, glass flakes, nonswelling mica, fullerene, carbon nanotubes, carbon black, graphite, metal foils, ceramic beads, clay, sericite, zeolite, bentonite, aluminum hydroxide, dolomite, kaolin, silica, fine powdered silicate, feldspar powder, potassium titanate, shirasu balloons, calcium carbonate, magnesium carbonate, barium sulfate, calcium oxide, aluminum oxide, titanium oxide, magnesium oxide, aluminum silicate, silicon oxide, magnesium hydroxide, gypsum, novaculite, dawsonite, white clay, glass fibers, carbon fibers, graphite fibers, metal fibers, potassium titanate whiskers, aluminum borate whiskers, magnesium-based whiskers, silicon-based whiskers, wollastonite, sepiolite, slag fibers, xonotlite, ellestadite, gypsum fibers, silica fibers, silica-alumina fibers, zirconia fibers, boron nitride fibers, silicon nitride fibers, and boron fibers.

Examples of the nitrogen-containing compound include melamine, benzoguanamine, dimethylolurea, and cyanuric acid.

In the case where the heat-resisting agent is blended, the blending amount of the heat-resisting agent is preferably 0.01 to 2.00 parts by mass, more preferably 0.05 to 1.00 parts by mass, still more preferably 0.10 to 0.50 parts by mass per 100 parts by mass of the polyamide resin composition.

Examples of the function imparting agent other than those described above include components disclosed in JP 2002-370551 A.

The components other than the components (A) to (D) may each be one component or a combination of two or more components.

### <Method for producing polyamide resin composition>

The method for producing the polyamide resin composition is not particularly limited as long as the components can be kneaded, and examples thereof include a production method using a twin-screw kneader, a twin-screw extruder, a single-screw extruder, a multi-screw extruder, or the like. For example, any method may be used, such as a method in which all raw materials are blended and then melt-kneaded using a twin-screw extruder, a method in which some raw materials are blended and then melt-kneaded, and the remaining raw materials are further blended and melt-kneaded, and a method in which some raw materials are blended, and then the remaining raw materials are mixed using a side feeder during melt-kneading.

In the polyamide resin composition, the aliphatic polyamide resin (A) and the acid-modified polyolefin (B) may have partially reacted with each other. As an aspect of the reaction, mention is made of an aspect in which the terminal amino group of the aliphatic polyamide resin (A) reacts with the acid-modified group of the acid-modified polyolefin (B). Therefore, the blending amount of each component in producing the polyamide resin composition may not coincide with the content of each component in the polyamide resin composition after production.

### [Applications of polyamide resin composition and the like]

The polyamide resin composition is not particularly limited and can be used for production of a molded article using a known method such as injection molding, extrusion molding, blow molding, rotational molding, vacuum molding, and pressure molding. A molded article containing the polyamide resin composition can be used for a part requiring the sliding property. Examples of the part required to have the sliding property include parts intended for dynamic applications such as gears, cams, pulleys, bearings, bearing retainers, door checks, timing chain guides, and cable/hose support/guide devices. The polyamide resin composition may be used for other members requiring similar functions.

### Examples

Hereinbelow, the present invention will be described in more detail with reference to the following Examples and Comparative Examples, which should not be construed as limiting the scope of the present invention.

### <<Measurement method and evaluation>>

### [Mechanical properties]

### (1) Tensile stress, tensile fracture strain

An A-type test piece was prepared according to ISO 294-1, and a tensile test was performed in an atmosphere of 23°C and 50% RH according to ISO 527-1,2.

### (2) Flexural strength and flexural modulus

A B-type test piece was prepared according to ISO 294-1, and a bending test was performed in an atmosphere of 23°C and 50% RH according to ISO 178 (Method A).

### (3) Charpy impact strength

A B-type test piece was prepared according to ISO 294-1 and subjected to V-notch formation according to ISO 179/1eA in post-processing. A Charpy impact test was performed at a hammer capacity of 1 J in an atmosphere of 23°C and 50% RH.

When the tensile stress was 110 to 130 MPa, the tensile fracture strain was 3.0 to 5.0%, the flexural strength was 160 to 200 MPa, the flexural modulus was 4,500 to 5,000 MPa, and the Charpy impact strength was 4.0 KJ/m² or more, it was judged that the test piece was excellent in "mechanical properties".

### [Hardness]

### (1) Rockwell hardness (M scale)

The hardness was measured at 23°C and 50% RH according to ISO 6508-1 using an electric digital Rockwell hardness tester model ARD-P manufactured by Akashi Seisakusho, Ltd.

When the Rockwell hardness was 80 to 92, it was determined that the "hardness" was an appropriate hardness as the material of the sliding part.

### [Sliding property]

The sliding property between the polyamide resin composition and carbon steel was measured as follows.

### (1) Limiting PV value

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. In accordance with Method A of JIS K 7218, the limiting PV value of the prepared test piece was measured using a Suzuki type friction wear tester (EFM-III-EN manufactured by Orientec Co., Ltd.) by a ring-on-disc method using a ring having an outer diameter of 25.6 mm, an inner diameter of 20 mm, and a height of 15 mm, which was made of S45C carbon steel described in JIS G 4051, under the conditions that a test speed (circumferential speed) was set to 500 mm/s, a test load of 25 kgf (245 N) was applied at the time of starting the test, and the load was increased by 25 kgf (245 N) every 5 minutes. The limiting PV test value was obtained from Formula (I) below from the load immediately before the load at which the test piece was melted and the test speed (circumferential speed) of 500 mm/s. Limiting PV value = pressure applied to test piece immediately before test piece was melted × test speed (circumferential speed)

### (2) Dynamic friction coefficient

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. In accordance with Method A of JIS K 7218, the frictional resistance force immediately before the limiting PV value of the prepared test piece was reached was measured using a Suzuki type friction wear tester (EFM-III-EN manufactured by Orientec Co., Ltd.) by a ring-on-disc method using a ring having an outer diameter of 25.6 mm, an inner diameter of 20 mm, and a height of 15 mm, which was made of S45C carbon steel described in JIS G 4051, under the conditions that a test speed (circumferential speed) was set to 500 mm/s, a test load of 25 kgf (245 N) was applied at the time of starting the test, and the load was increased by 25 kgf (245 N) every 5 minutes. The dynamic friction coefficient is a value calculated from Formula (II) below. Dynamic friction coefficient = (frictional resistance force immediately before reaching limiting PV value)/(vertical load applied to test piece)

When the limiting PV value was 400 MPa·cm/sec or more and the dynamic friction coefficient (polyamide to carbon steel) was 0.10 or less, it was judged that the "sliding property" was excellent.

### [Wear amount]

### (1) Wear amount of polyamide

In order to determine the wear amount of the sliding part, the wear amount of the polyamide resin composition with respect to carbon steel was measured as follows.

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. In accordance with Method A of JIS K 7218, the wear depth of the polyamide sliding surface of the test piece was measured using a Suzuki type friction wear tester (EFM-III-EN manufactured by Orientec Co., Ltd.) by a ring-on-disc method using a ring having an outer diameter of 25.6 mm, an inner diameter of 20 mm, and a height of 15 mm, which was made of S45C carbon steel described in JIS G 4051, under the conditions of a test speed (circumferential speed) of 300 mm/s, a sliding surface pressure of 4.4 MPa, and a sliding distance of 3.24 km. The wear amount is a value calculated from Formula (III) below. Polyamide wear amount = (sliding area × wear depth of test piece of polyamide resin composition)/(sliding surface pressure × sliding distance)

### (2) Polyacetal wear amount

In order to determine the wear amount of the object with which the sliding part comes into contact, the following measurement was performed on the wear amount of the polyacetal resin with respect to the polyamide resin composition using the polyacetal resin as the object with which the sliding part comes into contact.

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. Similarly, for the polyacetal resin, a ring test piece having an outer diameter of 25.6 mm, an inner diameter of 20 mm, and a height of 15 mm was prepared. In accordance with Method A of JIS K 7218, the wear depth of the sliding surface of the test piece of the polyacetal resin was measured using a Suzuki type friction wear tester (EFM-III-EN manufactured by Orientec Co., Ltd.) by a ring-on-disc method using a test piece of the polyamide resin composition and a ring test piece of the polyacetal resin under the conditions of a test speed (circumferential speed) of 100 mm/s, a sliding surface pressure of 1.25 MPa, and a sliding distance of 1.08 km. The polyacetal wear amount is a value calculated from Formula (IV) below. Polyacetal wear amount = (sliding area × wear depth of test piece of polyacetal resin)/(sliding surface pressure × sliding distance)

### (3) Dynamic friction coefficient

The dynamic friction coefficient between the polyamide resin composition and the polyacetal resin was measured as follows.

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. Similarly, for the polyacetal resin, a ring test piece having an outer diameter of 25.6 mm, an inner diameter of 20 mm, and a height of 15 mm was prepared. In accordance with Method A of JIS K 7218, the frictional resistance force was measured using a Suzuki type friction wear tester (EFM-III-EN manufactured by Orientec Co., Ltd.) by a ring-on-disc method using a test piece of the polyamide resin composition and a ring test piece of the polyacetal resin under the conditions of a test speed (circumferential speed) of 100 mm/s, a sliding surface pressure of 1.25 MPa, a sliding distance of 1.08 km, and a sliding surface test load of 25 kg. The dynamic friction coefficient is a value calculated from Formula (V) below. Dynamic friction coefficient = (frictional resistance force)/(sliding surface test load)

When the polyamide wear amount was 5.0 mm³/MPa·km or less, the polyacetal wear amount was 1.7 mm³/MPa·km or less, and the dynamic friction coefficient (polyamide to polyacetal) was 0.018 or less, it was determined that the "wear amount" was small.

### [Overall evaluation]

An example in which it was determined that the "mechanical property" was excellent, the "sliding property" was excellent, and the "wear amount" was small was evaluated as ∘ (passed), and an example in which even one of the criteria was not satisfied was evaluated as × (failed).

The components used in the Examples and Comparative Examples are as follows.
Polyamide 6: manufactured by UBE Corporation, number average molecular weight: 15,000; terminal amino group concentration: 40 µmol/g
LY1040: maleic anhydride-modified ultrahigh molecular weight polyethylene, product name "LUBMER (registered trademark) LY1040", manufactured by Mitsui Chemicals, Inc., intrinsic viscosity [η] = 25 dl/g
Glass fibers (1): round-chopped, NEG T-211DE Φ6.5 µm (manufactured by Nippon Electric Glass Co., Ltd., average fiber diameter: 6.5 µm, sizing agent containing polyurethane resin and copolymer having acid group is applied)
Glass fibers (2): round-chopped, NEG T-211H Φ10.5 µm (manufactured by Nippon Electric Glass Co., Ltd., average fiber diameter: 10.5 µm, sizing agent containing polyurethane resin and copolymer having acid group is applied)
Glass fibers (3): round-chopped, 456S Φ6.5 µm (manufactured by Nitto Boseki Co., Ltd., average fiber diameter: 6.5 µm, sizing agent containing polyurethane resin is applied)
Ethylenebisstearamide: product name "Light Amide WH-255", manufactured by Kyoeisha Chemical Co., Ltd.
Calcium stearate: Calcium Stearate U manufactured by NOF CORPORATION
Magnesium stearate: magnesium stearate manufactured by NOF CORPORATION
Carbon black: Cabot corporation VALCAN P
CuI/KI: cuprous iodide/potassium iodide = 1/6 (mixture)
Dispersant: Nonionic activator, product name "Baloo-7220", manufactured by Marubishi Industry Co., Ltd.
Polyacetal resin used for measurement: product name "DURACON M90-40", manufactured by Polyplastics Co., Ltd.

The number average molecular weight of polyamide 6 is a value determined from the relative viscosity. The relative viscosity is a value measured according to JIS K 6920-2 by dissolving 1 g of the polyamide in 100 ml of 96% concentrated sulfuric acid and performing measurement at 25°C.

The terminal amino group concentration of polyamide 6 is a value determined by dissolving the resin in a mixed solvent of phenol and methanol and subjecting the resultant solution to neutralization titration.

The intrinsic viscosity [η] of the acid-modified polyolefin is a value measured in a decalin solvent at 135°C.

The average fiber diameter of the glass fibers is a catalog value.

### [Examples 1 to 4 and Comparative Examples 1 to 4]

The components shown in Table 1 were melt-kneaded with a ZSK32Mc twin-screw kneader manufactured by Coperion GmbH to produce intended polyamide resin composition pellets. When the evaluation method is not particularly described, the obtained pellets were injection-molded at a cylinder temperature of 290°C and a mold temperature of 80°C to produce various test pieces, and various physical properties were evaluated.

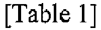

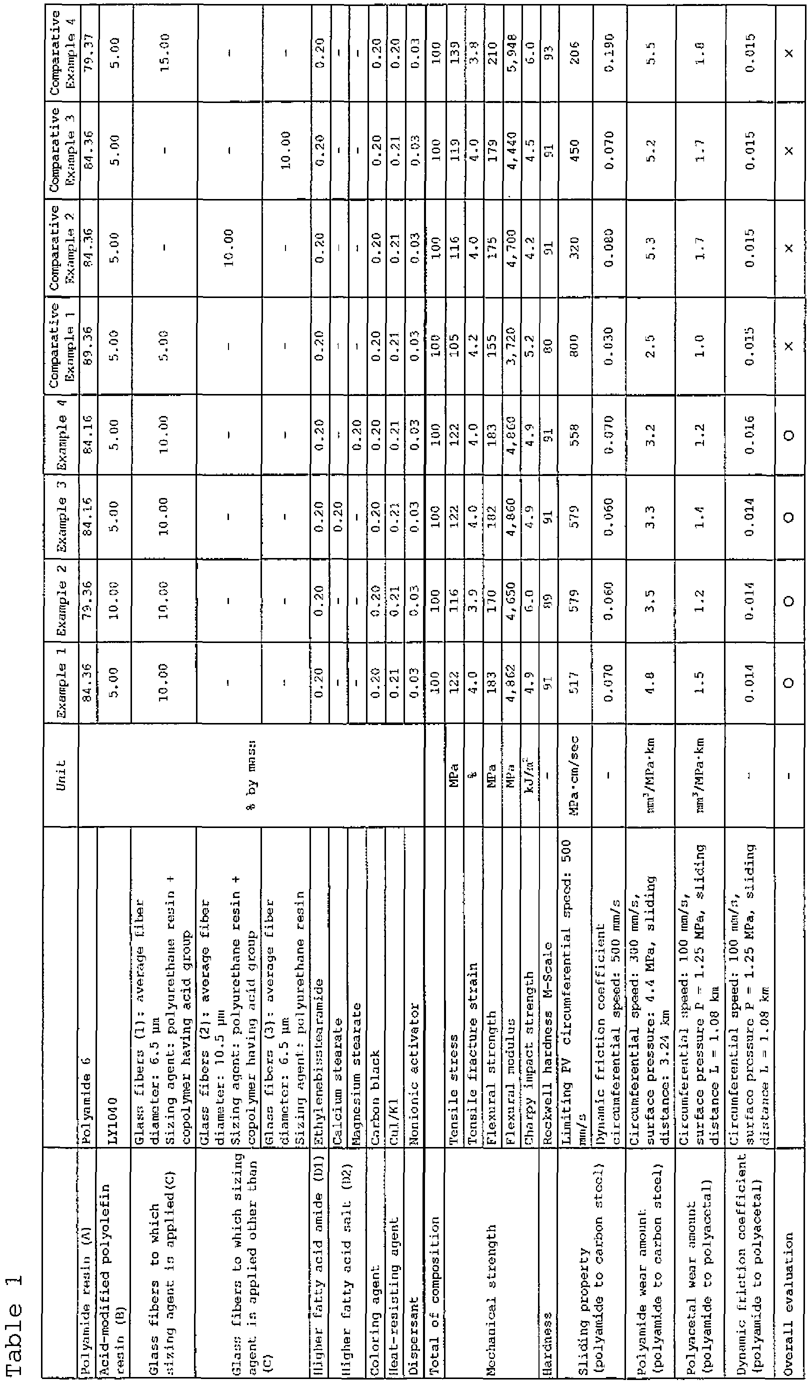

As is apparent from the results of Table 1, the polyamide resin compositions of Examples are excellent in mechanical properties and sliding properties and show small wear amounts.

In Comparative Example 1 in which the amount of the sized glass fibers (C) was smaller than the range of the invention of the present application, the mechanical properties were inferior.

In Comparative Example 2 in which the average fiber diameter of the glass fibers was longer than the range of the invention of the present application, the sliding property was poor, and the wear amount of the sliding part was large.

In Comparative Example 3 in which the sizing agent of the glass fibers did not contain the copolymer having an acid group, the mechanical properties were poor, and the wear amount of the sliding part was large.

In Comparative Example 4 in which the amount of the sized glass fibers (C) was larger than the range of the invention of the present application, the mechanical properties and the sliding property were inferior, the hardness was large, and the wear amounts of both the sliding part and the contact target of the sliding part were large.

### Industrial Applicability

The polyamide resin composition of the present invention is suitably used as a molded article for a part requiring the sliding property.

## Claims

1. A polyamide resin composition comprising:
an aliphatic polyamide resin (A);
an acid-modified polyolefin (B); and
glass fibers to which a sizing agent is applied (C),
wherein 50.00 to 90.00 parts by mass of the aliphatic polyamide resin (A), 2.00 to 15.00 parts by mass of the acid-modified polyolefin (B), and 6.00 to 14.00 parts by mass of the glass fibers to which a sizing agent is applied (C) are blended per 100 parts by mass of the polyamide resin composition,
a intrinsic viscosity [η] of the acid-modified polyolefin (B) as measured in a decalin solvent at 135°C is 10 to 40 dl/g,
an average fiber diameter of the glass fibers is 10.0 µm or less, and
the sizing agent contains a polyurethane resin and a copolymer having an acid group.

2. The polyamide resin composition according to claim 1, further comprising at least one higher fatty acid compound (D) selected from the group consisting of a higher fatty acid amide (D1) and a higher fatty acid salt (D2) blended in an amount of 0.05 to 0.50 parts by mass per 100 parts by mass of the polyamide resin composition.

3. The polyamide resin composition according to claim 1, wherein the aliphatic polyamide resin (A) has a constituent unit derived from an aminocarboxylic acid or a lactam.

4. The polyamide resin composition according to claim 1, wherein the aliphatic polyamide resin (A) has a number average molecular weight of 10,000 to 35,000.

5. A molded article which is obtained from the polyamide resin composition according to any one of claims 1 to 4.

6. The molded article according to claim 5, which is used for an application requiring a sliding property.
